# DEMANDE DE BREVET EUROPEEN

(11) **EP 4 786 076 A1**
(43) Date de publication de la demande: **05.08.2026**
(21) Numéro de dépôt: 25221653.6
(22) Date de dépôt: 09.12.2025
(51) Int. Cl.: B22F 10/32, B22F 10/28, B33Y 10/00, B33Y 70/00, C22C 33/02

(54) **PROCEDE DE FABRICATION D'UN OBJET EN ACIER PAR FUSION SUR LIT DE POUDRE**

(30) Priorité: 10.12.2024 FR 2413810
(71) Demandeur: Commissariat à l'Energie Atomique et aux Energies Alternatives, 75015 Paris (FR)
(72) Inventeur: GIROUX, Pierre-François, 27400 LOUVIERS (FR); MASKROT EL IDRISSI, Hicham, 92160 ANTONY (FR); BURGE-CATINOT, William, 91430 IGNY (FR)
(74) Mandataire: Gevers & Orès

(57) **Abrégé**

L'invention concerne un procédé de fabrication d'un objet en acier par fusion sur lit de poudre caractérisé en ce qu'il comprend les étapes suivantes :
a) fournir une couche de poudre d'acier 316L comportant au plus 200 ppm d'azote, la poudre employée n'ayant pas fait l'objet d'une atomisation particulière ou d'un quelconque prétraitement chimique,
b) effectuer une consolidation de la couche de poudre par fusion sur lit de poudre sous atmosphère contrôlée à une pression partielle d'Argon (Ar) p_{Ar} telle que 0 ≤ p_{Ar} < 1 et une pression partielle de diazote (N₂) telle que 0 < p_{N2} ≤ 1, avec par + p_{N2} = 1,
c) répéter les étapes a) et b) autant que nécessaire pour fabriquer l'objet en acier.

## Description

### Domaine technique de l'invention

L'invention se rapporte au domaine de la fabrication d'un objet en acier par fusion sur lit de poudre.

L'invention peut trouver application dans nombreux domaines industriels tels que la production d'énergie, l'aéronautique, le spatial ou encore l'automobile.

### Arrière-plan technique

Les procédés de fabrication d'un objet en acier par fusion sur lit de poudre font l'objet d'études approfondies depuis plusieurs années.

Ainsi, les paramètres accessibles et modifiables au sein des équipements disponibles sur le marché pour mettre en œuvre de tels procédés (par exemple pour une fusion laser sur lit de poudre : puissance laser, vitesse du balayage du laser, etc.) et l'optimisation des géométries des équipements utilisés pour mettre en œuvre ces procédés ont un impact majeur sur les performances des objets ainsi fabriqués (propriétés mécaniques, etc). La maitrise de ces différents paramètres constitue une partie intégrante du savoir-faire technique des fabricants d'équipements.

Par ailleurs, des études ont montré que les caractéristiques physico-chimiques des poudres d'acier utilisées ont également une influence significative sur les caractéristiques des objets ainsi fabriqués. Il a par exemple été démontré que la modification de la teneur en éléments mineurs, notamment en azote et en oxygène, d'une poudre d'acier 316L mène à des modifications significatives des caractéristiques microstructurales de l'objet obtenu après fabrication (taille des grains, texture et précipitation au sein de la matrice métallique notamment) qui peuvent aussi impacter les performances de l'objet finalement obtenu (caractéristiques mécaniques, etc).

Dans l'état actuel des connaissances, la maitrise des performances de l'objet final, liées à ces caractéristiques microstructurales, implique des processus de traitements préalables spécifiques des poudres utilisées et chargées dans l'équipement de mise en œuvre du procédé de fusion sur lit de poudre.

Pour contrôler les caractéristiques du produit final, les options existantes basées sur la physico-chimie des poudres consistent à :
- modifier le procédé d'atomisation des poudres (le plus souvent effectué par les fabricants et fournisseurs de poudre), ce qui est complexe et potentiellement onéreux et/ou à ;
- insérer une ou plusieurs étapes de pré-traitement des poudres, en éliminant les traces d'espèces chimiques indésirables, ce qui rend la fabrication plus longue et plus onéreuse.

Il convient de noter que, dans l'état de l'art de manière générale, la teneur en azote est fixée avant d'effectuer la consolidation, par exemple lors de l'atomisation des poudres ou de pré-traitement des poudres. L'homme de métier utilise donc une poudre d'acier avec une teneur fixée puis la consolide. Il obtient donc un acier avec des caractéristiques microstructurales en fonction de la teneur d'azote de la poudre d'acier fournie, la consolidation ne changeant rien à cette teneur en azote.

Par ailleurs, dans certains cas, on peut avoir besoin de fabriquer une pièce dont les propriétés microstructurales ne sont pas les mêmes partout. Dans ce cas, l'approche connue consiste à changer de poudre en cours de fabrication, ce qui entraine une perte de productivité et une complexité accrues (protocole d'interruption et de redémarrage de la fabrication, etc). Les différentes poudres alors employées peuvent notamment avoir été préalablement atomisées ou prétraitées différemment.

Un objectif de l'invention est de proposer un procédé de fabrication d'un objet en acier par fusion sur lit de poudre amélioré.

En particulier, un objectif de l'invention est de proposer un procédé de fabrication d'un objet en acier par fusion sur lit de poudre permettant de modifier les propriétés microstructurales de l'objet à fabriquer en cours de fabrication, sans interrompre la fabrication.

### Résumé de l'invention

Pour résoudre l'objectif précité, l'invention propose un procédé de fabrication d'un objet en acier par fusion sur lit de poudre caractérisé en ce qu'il comprend les étapes suivantes :
a) fournir une couche de poudre d'acier 316L comportant au plus 200 ppm d'azote, la poudre employée n'ayant pas fait l'objet d'une atomisation particulière ou d'un quelconque prétraitement chimique,
b) effectuer une consolidation de la couche de poudre par fusion sur lit de poudre sous atmosphère contrôlée à une pression partielle d'Argon (Ar) p_{Ar} telle que 0 ≤ p_{Ar} < 1 et une pression partielle de diazote (N₂) telle que 0 < P_{N2} ≤ 1, avec p_{Ar} + P_{N2} = 1,
c) répéter les étapes a) et b) autant que nécessaire pour fabriquer l'objet en acier.

Le procédé selon l'invention pourra comprendre l'une au moins des caractéristiques additionnelles suivantes, prises seules ou en combinaison :
- la poudre d'acier fournie à l'étape a) comporte au plus 170 ppm d'azote, avantageusement au plus 150 ppm d'azote ;
- au cours de l'étape b), on fait varier la pression (p_{N2}) partielle de diazote ;
- l'étape b) est mise en œuvre avec une fusion sur lit de poudre est choisie parmi : la fusion laser sur lit de poudre ou le dépôt sous énergie concentrée ;
- l'étape b) est mise en œuvre avec une fusion laser sur lit de poudre, avec les paramètres suivants :
   - puissance laser : 50 à 200W,
   - vitesse de balayage : 0,3 à 3 m/s,
   - épaisseur d'une couche de poudre : 10 à 100 microns,
   - distance inter-cordons : 10 à 150 microns.
- au cours de l'étape c), on fait varier la pression partielle de diazote.

### Brève description des figures

D'autres objets et caractéristiques de l'invention apparaîtront plus clairement dans la description qui suit, faite en référence aux figures annexées, dans lesquelles :
La figure 1 est une représentation schématique des étapes principales du procédé conforme à l'invention ;
La figure 2 représente un appareil pour mettre en œuvre le procédé conforme à l'invention selon la technique de fusion laser sur lit de poudre ;
La figure 3(a) est une cartographie d'orientation cristalline réalisée par diffraction par rétrodiffusion d'électrons d'un acier 316L obtenu selon un procédé conforme à l'art antérieur ;
La figure 3(b) représente une cartographie d'orientation cristalline réalisée par diffraction par rétrodiffusion d'électrons d'un acier 316L obtenu selon un procédé conforme à l'invention ;
La figure 4 représente différentes cartographies d'orientation cristalline réalisées par diffraction par rétrodiffusion d'électrons d'un acier 316L obtenu selon un procédé conforme à l'art antérieur, et pour différentes teneurs en azote dans la poudre selon les images (a) à (e).

### Description détaillée de l'invention

L'invention concerne un procédé de fabrication d'un objet en acier par fusion sur lit de poudre. Le procédé comporte les étapes suivantes :
a) fournir une couche de poudre d'acier 316L comportant au plus 200 ppm d'azote, la poudre employée n'ayant pas fait l'objet d'une atomisation particulière ou d'un quelconque prétraitement chimique,
b) effectuer une consolidation de la couche de poudre par fusion sur lit de poudre sous atmosphère contrôlée à une pression partielle d'Argon (Ar) p_{Ar} telle que 0 ≤ p_{Ar} < 1 et une pression partielle de diazote (N₂) telle que 0 < P_{N2} ≤ 1, avec p_{Ar} + P_{N2} = 1,
c) répéter les étapes a) et b) autant que nécessaire pour fabriquer l'objet en acier.

Classiquement, la fusion sur lit de poudre est faite sous atmosphère contrôlée d'Argon (p_{Ar} = 1).

L'invention montre toutefois que la modification de l'atmosphère dans laquelle une poudre d'acier à faible teneur en azote ( < 200ppm) est consolidée a un impact sur la structure granulaire de l'acier formé et donc, notamment, sur les propriétés mécaniques du produit en acier ainsi fabriqué. Ceci se fait sans que la poudre employée n'ait besoin d'une atomisation particulière ou d'un quelconque prétraitement chimique. Dans le cadre de l'invention, la teneur en azote dans la poudre d'acier peut être modifiée au cours de la consolidation par fusion sur lit de poudre.

L'invention est donc d'autant moins triviale au regard de l'art antérieur existant que les cinétiques de consolidation en fusion sur lit de poudre (en particulier en fusion laser sur lit de poudre), particulièrement élevées, rendaient incertaines pour l'homme du métier de pouvoir gérer ou prévoir l'interaction du diazote dans l'enceinte avec le bain de fusion et sa diffusion dans le matériau consolidé à l'origine de la modification de la microstructure était particulièrement incertaine. En effet, l'écart de cinétique entre ces deux phénomènes (consolidation d'une part, diffusion d'autre part) est très important.

Avantageusement, la poudre d'acier fournie à l'étape a) comportera au plus 170 ppm d'azote, encore plus avantageusement au plus 150 ppm.

Par ailleurs, dans le cadre de l'invention, il est envisageable de faire varier la pression (p_{N2}) partielle de diazote au cours de l'étape b).

Cela permet alors de contrôler et modifier progressivement la structure granulaire (taille des grains, texture) de l'acier consolidé et ce, le long de la couche de poudre lors de la consolidation. On peut alors obtenir un objet en acier avec un gradient dans la structure granulaire et donc dans les propriétés mécaniques selon la direction de consolidation. En particulier, si la consolidation s'effectue avec une technique de balayage de la poudre, ce qui est à titre d'exemple non limitatif le cas avec une fusion laser sur lit de poudre, il est possible de créer deux gradients, définis par les deux directions X, Y orthogonales du plan du lit de poudre.

De manière analogue, dans le cadre de l'invention, il est envisageable de faire varier la pression (p_{N2}) partielle de diazote au cours de l'étape c). Par-là, il faut comprendre que lorsqu'on répète une étape b), donc lorsqu'on consolide une autre couche de poudre située au-dessus de la précédente.

Cela permet alors de contrôler et modifier progressivement la structure granulaire (taille des grains, texture) de l'acier consolidé et ce, couche après couche de poudre lors de la consolidation. On peut alors obtenir un objet en acier avec un gradient dans la structure granulaire et donc dans les propriétés mécaniques selon la direction d'empilement des couches. On comprend que ce gradient-là est alors défini selon une direction Z perpendiculaire aux directions X, Y.

La fusion sur lit de poudre est choisie parmi : la fusion laser sur lit de poudre (ou L-PBF pour « *Laser Powder Bed Fusion*» selon la terminologie anglo-saxonne) ou le dépôt sous énergie concentrée (ou DED pour « *Directed Energy Deposition* » selon la terminologie anglo-saxonne).

Par ailleurs, lorsque le procédé selon l'invention est mis en œuvre avec une fusion laser sur lit de poudre, on peut prévoir les paramètres suivants :
- puissance laser : 50 à 200W,
- vitesse de balayage : 0,3 à 3 m/s,
- épaisseur d'une couche de poudre : 10 à 100 microns,
- distance inter-cordons : 10 à 150 microns.

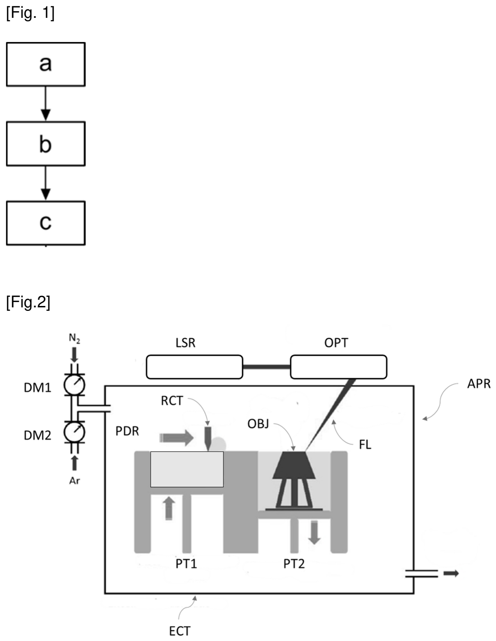

La figure 2 représente un appareil capable de mettre en œuvre le procédé conforme à l'invention, dans le cas particulier d'une fusion laser sur lit de poudre. Ce même appareil est également capable de mettre en œuvre un procédé conforme à l'art antérieur.

Cet appareil APR comprend une enceinte ECT dans laquelle est destinée à régner une atmosphère contrôlée. Au sein de l'enceinte, on retrouve un bac comportant de la poudre PDR, lequel peut être déplacé par un piston PST1 dont le mouvement permet d'extraire une quantité prédéfinie de poudre. Cette poudre PDR peut être amenée par une raclette RCT vers un autre bac servant à la consolidation de la poudre par un faisceau laser FL. Cet autre bac est monté sur piston PST2 pour descendre au fur et à mesure que des couches de poudre sont amenées pour la fabrication de l'objet OBJ en acier. Le faisceau laser FL est généré par un laser LSR, dont le faisceau de sortie est conditionné par un ensemble optique OPT avant d'être orienté vers la couche de poudre à consolider. L'atmosphère régnant dans l'enceinte ECT peut être contrôlée avec une quantité adéquate de diazote et d'Argon, respectivement gérés par des débitmètres dédiés DM1, DM2.

Les avantages précités du procédé selon l'invention pourront être mieux compris à l'appui des tests (test 2 versus test 1 et tests complémentaires) présentés ci-dessous.

### Test 1 (référence de l'art antérieur).

La poudre d'acier 316L est constituée de particules d'une granulométrie située dans la gamme 15 à 45 µm (grains sphériques), avec une teneur en azote inférieure ou égale à 200 ppm (faible teneur en azote). Cette poudre est introduite dans la réserve de poudre RP dans l'équipement de fabrication, en l'occurrence une machine TruPrint^{®} 1000 à laser fibré dopé à l'ytterbium (longueur d'onde 1064 nm, spot laser 55 µm).

Puis, on effectue une consolidation de la poudre d'acier 316L à faible teneur en azote sous atmosphère contrôlée à l'Argon (Ar) dans l'enceinte de fabrication. L'Argon est de qualité industrielle, avec une pureté supérieure à 99,99 % en volume. Les paramètres employés pour la consolidation sont les suivantes :
- puissance laser : 165 W
- vitesse de balayage : 450 mm/s
- épaisseur de couche : 30 µm
- distance inter-cordons : 60 µm.

### Test 2 (conforme à l'invention).

Dans ce test 2, la consolidation est faite sous atmosphère contrôlée de diazote (N₂). Le diazote (N₂) est de qualité industrielle, avec une pureté supérieure à 99,99 % en volume. Tout le reste est identique au test 1, donc en particulier la nature de la poudre employée, l'équipement employé ainsi que les paramètres de consolidation mis en œuvre.

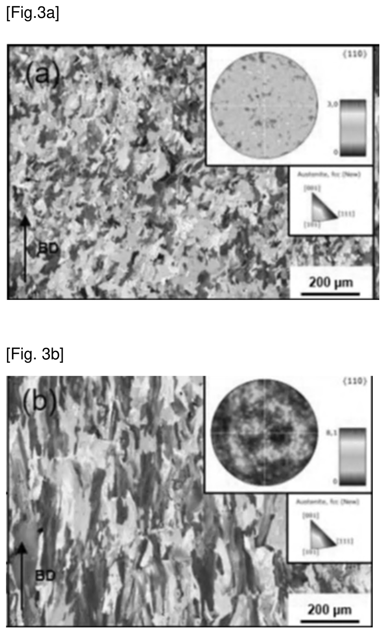

La figure 3(a) et la figure 3(b) montrent respectivement les propriétés microstructurales du produit en acier 316L ainsi fabriqué pour la référence de l'art antérieur (test 1) et l'invention (test 2).

Ces figures sont des cartographies d'orientation cristalline réalisée par diffraction par rétrodiffusion d'électrons (ou EBSD pour « *Electron Back Scattered Diffraction* » selon la terminologie anglo-saxonne) de l'acier 316L.

Comparé au matériau consolidé sous atmosphère d'argon (figure 3(a) / art antérieur), la consolidation d'un acier 316L élaboré par fusion laser sur lit de poudre à partir d'une poudre ayant une teneur en azote inférieure à 200 ppm dans une enceinte remplie de diazote (figure 3(b) / invention) engendre une modification significative de la structure granulaire du produit final.

Dans le cas présenté, si l'on compare plus précisément la structure de la figure 3(b) à celle de la figure 3(a), on constate que :
- la morphologie des grains présente une structure colonnaire orientée dans le sens de construction (BD) sur la figure 3(b) alors que cette structure est quasi-équiaxe sur la figure 3(a) ;
- la taille de grain est multipliée par un facteur compris entre 2,5 et 4 entre la figure 3(b) et la figure 3(a),
- la texture est plus fortement marquée selon la direction <110> sur la figure 3(b).

La comparaison des deux tests (test 1 / test 2) apporte donc la preuve que la modification de l'atmosphère dans laquelle la poudre d'acier est consolidée a un impact sur la structure granulaire de l'acier formé et donc, notamment, sur les propriétés mécaniques du produit en acier ainsi fabriqué. Par ailleurs, dans le cadre de l'invention, la poudre employée n'a pas fait l'objet d'une atomisation particulière ou d'un quelconque pré-traitement chimique.

### Tests complémentaires.

D'autres tests ont été effectués avec le procédé de l'art antérieur, plus précisément dans les conditions mentionnées précédemment pour le test 1, mais avec des poudres d'acier 316L à différentes teneurs en azote, à savoir (a) 93 ± 7 ppm, (b) 169 ± 22 ppm, (c) 292 ± 23 ppm, (d) 452 ± 53 ppm et (e) 558 ± 22 ppm.

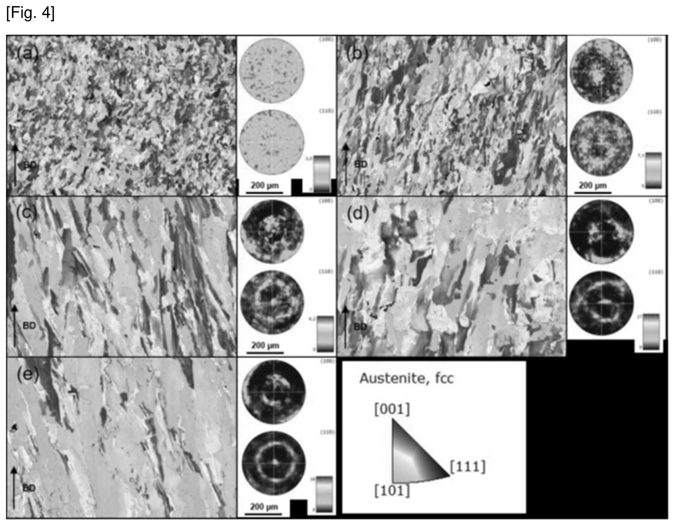

Les cartographies d'orientation cristalline réalisée par diffraction par rétrodiffusion d'électrons (ou EBSD pour « *Electron Back Scattered Diffraction* » selon la terminologie anglo-saxonne) de l'acier 316L obtenues pour les cas (a) à (e) sont fournies en figure 4.

On remarque que l'ajout progressif d'azote dans la poudre d'acier 316L permet une transition d'une structure quasi-équiaxe (cas (a) à faible teneur en azote : < 200 ppm ; structure similaire à celle de la figure 3(a)) à une structure colonnaire (cas (c) à teneur en azote > 200 ppm, en passant par un état intermédiaire qui est celui du cas (b)). Les cas (d) et (e) (teneur en azote > 200 ppm dans la poudre) se caractérise par une structure de grains également colonnaire, mais plus grossière que celle observée pour le cas (c) .

Au passage, on relève que la structure de l'acier 316L obtenue en figure 3(b) (invention), de type colonnaire, est similaire à celle de la figure 4, cas (c) et peut plus généralement être également considérée comme similaire à celles de la figure 4, cas (d) et cas (e).

De tous ces tests, on comprend donc aussi qu'il importe peu de partir d'une poudre d'acier avec une quantité d'azote prédéterminée, par exemple parce que conformément à une méthode de l'art antérieur, une poudre d'acier classique en faible teneur en azote a été prétraitée pour y ajouter de l'azote, puis consolidée sous atmosphère d'Argon, ou bien, conformément à l'invention, de partir d'une poudre classique contenant une faible quantité d'azote (< 200ppm) puis consolidée sous atmosphère d'azote pour définir une structure granulaire et des propriétés mécaniques équivalentes, dans les deux cas, du produit en acier fabriqué.

Ainsi, dans la mesure les résultats exposés en figure 4 pour différentes teneurs en azote de la poudre, sont donc transposables à l'invention si bien qu'en partant d'une poudre classique à faible teneur en azote (< 200 ppm), puis en réglant une pression partielle de diazote (p_{N2}) relativement à une pression partielle d'Argon (P_{AR}) avec p_{Ar} + P_{N2} = 1, il est possible d'obtenir tous types de structures intermédiaires entre celle de la figure 3(a) (art antérieur / hors invention) et celle de la figure 3(b) (pression partielle de diazote P_{N2} = 1).

En particulier, on comprend qu'il est envisageable, en partant d'une atmosphère sous Argon (Ar) et en effectuant l'ajout progressif de diazote (N₂) au sein de l'enceinte de l'appareil pour réaliser une fusion laser sur lit de poudre, d'effectuer une transition d'une structure granulaire à une autre en cours de fabrication, notamment couche de dépôt après couche de dépôt. Il s'agit alors de faire varier la pression partielle de diazote pendant la fabrication dudit objet. En conséquence, cela rend possible de fabriquer un objet en acier dont la structure granulaire évolue selon un gradient dirigé dans la direction de dépôt des couches de poudre successivement déposées pour être consolidées.

## Revendications

1. Procédé de fabrication d'un objet en acier par fusion sur lit de poudre **caractérisé en ce qu'**il comprend les étapes suivantes :
a) fournir une couche de poudre d'acier 316L comportant au plus 200 ppm d'azote, la poudre employée n'ayant pas fait l'objet d'une atomisation particulière ou d'un quelconque prétraitement chimique,
b) effectuer une consolidation de la couche de poudre par fusion sur lit de poudre sous atmosphère contrôlée à une pression partielle d'Argon (Ar) p_{Ar} telle que 0 ≤ p_{Ar} < 1 et une pression partielle de diazote (N₂) telle que 0 < P_{N2} ≤ 1, avec p_{Ar} + P_{N2} = 1,
c) répéter les étapes a) et b) autant que nécessaire pour fabriquer l'objet en acier.

2. Procédé selon la revendication 1, dans lequel la poudre d'acier fournie à l'étape a) comporte au plus 170 ppm d'azote, avantageusement au plus 150 ppm d'azote.

3. Procédé selon l'une des revendications précédentes, dans lequel au cours de l'étape b), on fait varier la pression (p_{N2}) partielle de diazote.

4. Procédé selon l'une des revendications précédentes, dans lequel l'étape b) est mise en œuvre avec une fusion sur lit de poudre est choisie parmi : la fusion laser sur lit de poudre ou le dépôt sous énergie concentrée.

5. Procédé selon l'une des revendications précédentes, dans lequel l'étape b) est mise en œuvre avec une fusion laser sur lit de poudre, avec les paramètres suivants :
- puissance laser : 50 à 200W,
- vitesse de balayage : 0,3 à 3 m/s,
- épaisseur d'une couche de poudre : 10 à 100 microns,
- distance inter-cordons : 10 à 150 microns.

6. Procédé selon l'une des revendications précédentes, dans lequel au cours de l'étape c), on fait varier la pression (p_{N2}) partielle de diazote.
